(19) Europäisches Patentamt / European Patent Office / Office européen des brevets

(11) **EP 1 868 309 A1**

(12) **EUROPEAN PATENT APPLICATION**

(43) Date of publication:
**19.12.2007 Bulletin 2007/51**

(51) Int Cl.:
*H04J 14/08* (2006.01)     *H04J 14/02* (2006.01)

(21) Application number: **07075721.6**

(22) Date of filing: **23.07.2003**

(84) Designated Contracting States:
**DE FR GB**

(30) Priority: **24.07.2002  JP 2002215780**

(62) Document number(s) of the earlier application(s) in accordance with Art. 76 EPC:
**03254590.7 / 1 385 289**

(71) Applicant: **NIPPON TELEGRAPH AND TELEPHONE CORPORATION**
**Tokyo 100-8116 (JP)**

(72) Inventors:
• **Shake, Ippei,**
**NTT Intellectual Property Center**
**Musashino-shi**
**Tokyo 180-8585 (JP)**

• **Takara, Hidehiko,**
**NTT Intellectual Property Center**
**Musashino-shi**
**Tokyo 180-8585 (JP)**
• **Kawanishi, Satoki,**
**NTT Intellectual Property Center**
**Musashino-shi**
**Tokyo 180-8585 (JP)**

(74) Representative: **Beresford, Keith Denis Lewis**
**Beresford & Co**
**16 High Holborn**
**London WC1V 6BX (GB)**

Remarks:
This application was filed on 24 - 08 - 2007 as a divisional application to the application mentioned under INID code 62.

(54)     **A method and apparatus for channel extraction of optical time-division-multiplexing signal**

(57)     Signal channels are identified easily by uniquely correlating the port numbers of the optical time-division-demultiplexing unit with channel numbers. The extraction apparatus includes an optical time-division-demultiplexing unit (101) that separates multiplexed signals into N channels and provides them to N separate ports, a channel extraction unit (102) that is connected to N separate ports and extracts one channel number of the N channels, a channel switch (103) that switches the N channels to the output ports of which port numbers uniquely match with the numbers of the N channels based on the relationship between the number of the one channel extracted and the output port number corresponding to the one channel number, and a data output unit (104) that has N output ports and provides the signals of the switched N channels to the output ports of which port numbers match with the channel numbers.

FIG.1

EP 1 868 309 A1

**Description**

The present invention relates to a method and an apparatus that make it easy to extract channels from time-division-multiplexed light signals.

The time-division multiplexing is known as a technique to increase the transmission capacity in signal transfer systems. As a method that defines the hierarchical structure of multiplexed signals for each transmission rate, the synchronous digital hierarchy (SDH) method is well known. Electric signals are multiplexed with a prescribed structure, and the multiplexed signals that have gone through optoelectronic conversion are transmitted over optical fiber.

In the prior art method for extracting the channels multiplexed in the time-division multiplexed signals, the overhead of the electric signal is used. In other words, the signal channels of the time-division-multiplexing (TDM) also use the overhead defined by the electric signal format employed in SDH. Specifically, optical TDM signals are demultiplexed into those of bit rates at which optoelectronic conversion is possible to do, and then the light signals in all channels are converted into electric signals. Then the obtained electric signals in the channels are read out, and their overhead data is interpreted to extract individual channels.

On the transmitting side, the signals in time-division-multiplexed channels are multiplexed by a low-speed frame signal that is controlled to shift the phase of each channel, while on the receiving side the channels are identified from the separated low-speed frame signal(for example, Japanese Patent Application Laid-open No. 2002-77091).

However, according to the prior art technique, since electric signals are examined after the light signals are separated into those of bit rates that can be handled by optoelectronic conversion and then converted into electric signals, the system scale grows and the system structure becomes complex.

Meanwhile, there are some methods that extract channels without demultiplexing time-division-multiplexed light signals (for example, Japanese Patent Application Laid-open Nos. 7-99484 (1995), United State Patent No. 5610911). On the transmitting side, such information that can extract the channels is incorporated in a predetermined channel upon signal multiplexing. On the receiving side, the position of the predetermined channel on the time axis is detected, and the rest channels are identified from relative time differences from the reference time position. This technique, however, has a problem that one channel is occupied for the process of channel extraction and the transmission rate decreases.

On the other hand, there is another technique to extract channels by overlapping each channel with a low-frequency signal of which frequency is unique to each channel (for example, Japanese Patent Application Laid-open No. 10-173634 (1998), United States Patent 6178022). This technique, however, has a problem that the system scale becomes large because it needs a circuit that generates different low-frequency signals for each channel.

An object of the present invention is to provide a method and an apparatus for channel extraction of optical time-division-multiplexed signal that decide one-to-one relations between the port numbers of the optical time-division-demultiplexing unit and the channel numbers and thereby make it easy to extract the channels.

To attain this goal, the invention provides a time-division-multiplexed light signal channel extraction method that separates the multiplexed signals into as many as N channels and extracts the channel numbers in order to provide the demultiplexed signals to the output ports of which port numbers match with the channel numbers. This method comprises a demultiplexing step of demultiplexing the multiplexed signals into N channels and providing the demultiplexed signals to as many as N separate ports, an extraction step of extracting the channel number of at least one channel in the N channels corresponding to said N separate ports, a switching step of switching the N channels to the output ports of which port numbers uniquely match with the numbers of the N channels based on the relationship between the number of the one channel identified in the extraction step and the output port number corresponding to said one channel number, and an output step of providing the signals of said switched N channels to the output ports of which output port numbers match with the channel numbers.

According to this method, the multiplexed light signals are separated into N channels and the channel sequence over the time axis is uniquely converted into the channel sequence over the wavelength axis to provide output to as many as N separate ports. Thus if one of the N channels is identified, all the N channels can be switched to the output ports at a time of which port numbers uniquely match with the channel numbers. Then it becomes easy to extract the channels, and the system can be downsized.

As another aspect of the invention, it may control the signals of said N channels provided to the separate ports so that the N channel numbers uniquely match with the output port numbers based on the relationship between the number of the one channel identified in the extraction step and the output port number corresponding to the one channel number.

As another aspect of the invention, it may have a demultiplexing step of demultiplexing the irregular-intervals time-division-multiplexed light signals, of which channel intervals on the time axis are not regular, into N channels and providing the demultiplexed signals to as many as N separate ports of the same intervals as those of the channels. The demultiplexing step provides the signals to all the N separate ports when the numbers of the N channels match with the numbers of the output ports. This method comprises a control step of monitoring the signal output to the output ports and controlling the signals of said N channels provided to the separate ports so that all the N separate ports receive signal output.

The above and other objects, effects, features and advantages of the present invention will become more apparent from the following description of embodiments thereof taken in conjunction with the accompanying drawings.

FIG.1 is a block diagram illustrating an optical time-division-multiplexed channel extraction apparatus of a first embodiment of the invention;

FIG.2A is a block diagram illustrating an optical time-division-multiplexed channel extraction apparatus of a second embodiment of the invention;

FIG.2B is a block diagram illustrating the results of channel extraction using the optical time-division-multiplexed channel extraction apparatus of the second embodiment;

FIG.3A is a block diagram illustrating an optical time-division-multiplexed channel extraction apparatus of a third embodiment of the invention;

FIG.3B is a block diagram illustrating the results of channel extraction using the optical time-division-multiplexed channel extraction apparatus of the third embodiment;

FIG.4 is a block diagram illustrating a first example of the optical time-division-demultiplexing unit;

FIG.5 shows an output spectrum from the semiconductor optical amplifier of the first example of the optical time-division-demultiplexing unit;

FIG.6 is a block diagram illustrating a second example of the optical time-division-demultiplexing unit;

FIG.7 shows an output spectrum from the optical fiber of the first example of the optical time-division-demultiplexing unit;

FIG.8 is a block diagram illustrating a third example of the optical time-division-demultiplexing unit;

FIG.9 is a diagram illustrating the relations between the multiplexed signals provided to the cross-correlation signal generator of the third example and the gate light pulse train;

FIG.10 is a circuit diagram of the third example of the optical time-division-demultiplexing unit;

FIG.11 is a block diagram of a fourth example of the optical time-division-demultiplexing unit;

FIG.12 is a diagram illustrating the relations between the multiplexed signals provided to the cross-correlation signal generator of the fourth example and the gate light pulse train;

FIG.13 is a circuit diagram of the fourth example of the optical time-division-demultiplexing unit;

FIG.14 is a block diagram of a fifth example of the optical time-division-demultiplexing unit;

FIG.15 is a diagram illustrating the relations between the multiplexed signals provided to the cross-correlation signal generator of the fifth example and the gate light pulse train;

FIG.16 is a circuit diagram of the fifth example of the optical time-division-demultiplexing unit;

FIG.17 is a block diagram illustrating the irregular-intervals optical time-division-multiplexed signal generator;

FIG.18 is a timing chart illustrating the time-division-multiplexing in the irregular-intervals optical time-division-multiplexed signal generator;

FIG.19 is a block diagram of a sixth example of the optical time-division-demultiplexing unit; and

FIG.20 is a diagram illustrating the relations between the multiplexed signals provided to the cross-correlation signal generator of the sixth example and the gate light pulse train.

Now the embodiments of the present invention will be described in detail with reference to the accompanying drawings.

(First embodiment)

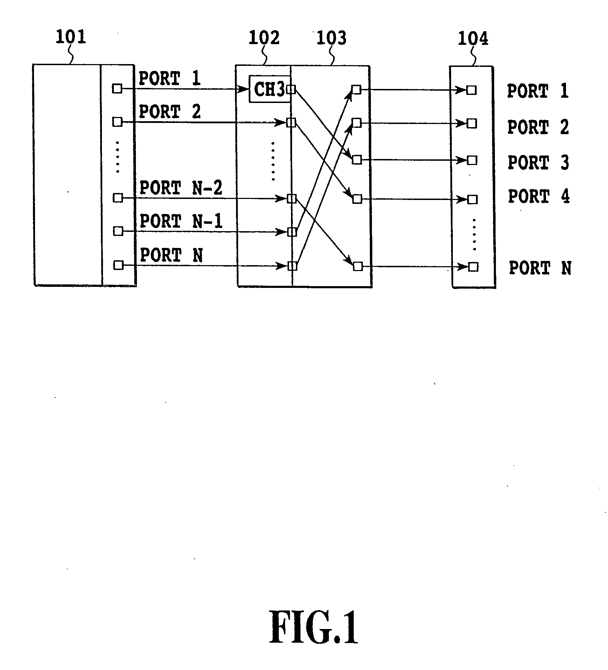

FIG.1 is a block diagram illustrating an optical time-division-multiplexed channel extraction apparatus of a first embodiment of the invention. This channel extraction apparatus comprises an optical time-division-demultiplexing unit 101 that separates the time-division-multiplexed light signals into as many as N channels, a channel extraction unit 102 that extracts the channel number of each channel, a channel switch 103 that switches the channels to ports corresponding to 1-N channel numbers, and a data output unit 104 equipped with as many as N output ports of 1-N port numbers.

The channel extraction unit 102 of the first embodiment only identifies the channel of separate port-1 of the optical time-division-demultiplexing unit 101. The port used for channel extraction may be one or more ports other than port-1, or may be two or more ports including port-1.

Optical time-division-multiplexing signals demultiplexed by the optical time-division-demultiplexing unit 101 are provided to ports 1-N and they are sent to the corresponding ports in the channel extraction unit 102. The channel extraction unit 102 identifies, for example, the channel of port-1, by wavelength detection or interpretation of the header of light-to-electric converted signal. The channel number for the signal provided from port-1 in FIG.1 is 3. Based on the channel numbers identified by the channel extraction unit 102, the channel switch 103 switches the signal from port-1 to output port-3 of the data output unit 104.

When channel 3 is assigned to port-1 of the optical time-division-demultiplexing unit 101, the other ports are uniquely related to individual channels on a one-to-one basis. Namely, ports 2, 3..., N-2, N-1, N of the optical time-division-demultiplexing unit 101 are related to output ports 4, 5..., N, 1, 2 of the data output unit 104. Then all the channels are identified by recognizing one channel. Other methods for relating the ports of the optical time-division-demultiplexing unit 101 and the data output unit 104 will be described later.

(Second embodiment)

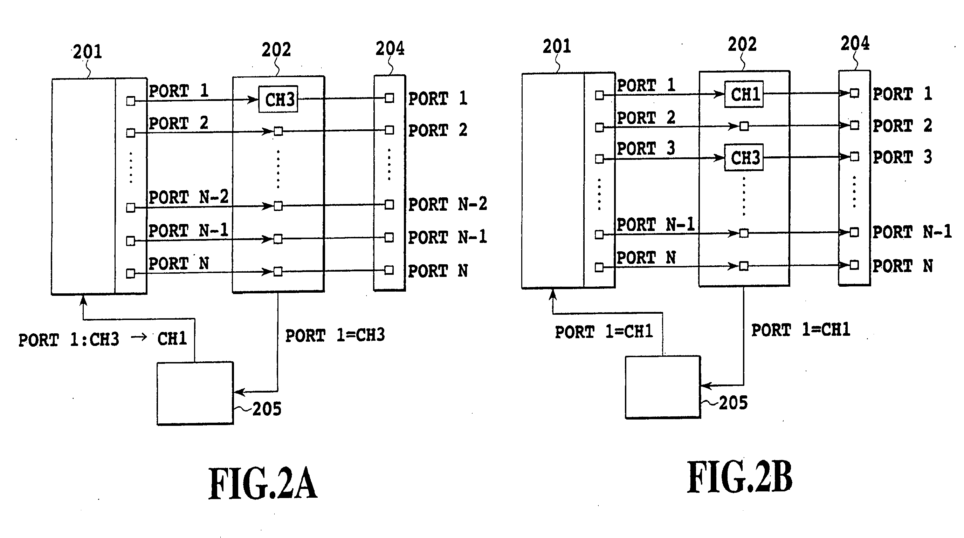

FIG.2A is a block diagram illustrating an optical time-division-multiplexed channel extraction apparatus of a second embodiment of the invention. This channel extraction apparatus comprises an optical time-division-demultiplexing unit 201 that separates the multiplexed signals into as many as N channels, a channel extraction unit 202 that extracts the channel number of each channel, a data output unit 204 that has as many as N output ports of 1-N port numbers, and a channel controller 205 that controls the signal demultiplexing sequence in the optical time-division-demultiplexing unit 201 based on the channel extraction result provided by the channel extraction unit 202.

The channel extraction unit 202 of the second embodiment only identifies the channel of port-1 of the optical time-division-demultiplexing unit 201. The port used for channel extraction may be one or more ports other than port-1, or may be two or more ports including port-1.

Multiplexed signals demultiplexed by the optical time-division-demultiplexing unit 201 are provided to ports 1-N and they are sent to the corresponding ports in the channel extraction unit 202. The channel extraction unit 202 identifies, for example, the channel of port-1, by wavelength detection or interpretation of the header of light-to-electric converted signal. The channel number for the signal provided from port-1 in FIG.2A is 3. Based on the channel numbers identified by the channel extraction unit 202, the channel controller 205 controls the signal demultiplexing sequence in the optical time-division-demultiplexing unit 201 so that the signal from port-1 is sent to output port-3 of the data output unit 204. Since channel number 3 is assigned to port-1, the signal demultiplexing sequence is shifted by two channels (two bits). FIG.2B shows the results of this shifting.

When channel 3 is assigned to port-1 of the optical time-division-demultiplexing unit 201, the other ports are also related to individual channels on a one-to-one basis. Namely, ports 2, 3..., N-2, N-1, N of the optical time-division-demultiplexing unit 101 are related to output ports 4, 5..., N, 1, 2 of the data output unit 204. In other words, all the channels have been identified by recognizing one channel. Other methods for relating the ports of the optical time-division-demultiplexing unit 201 and the data output unit 204 will be described later.

(Third embodiment)

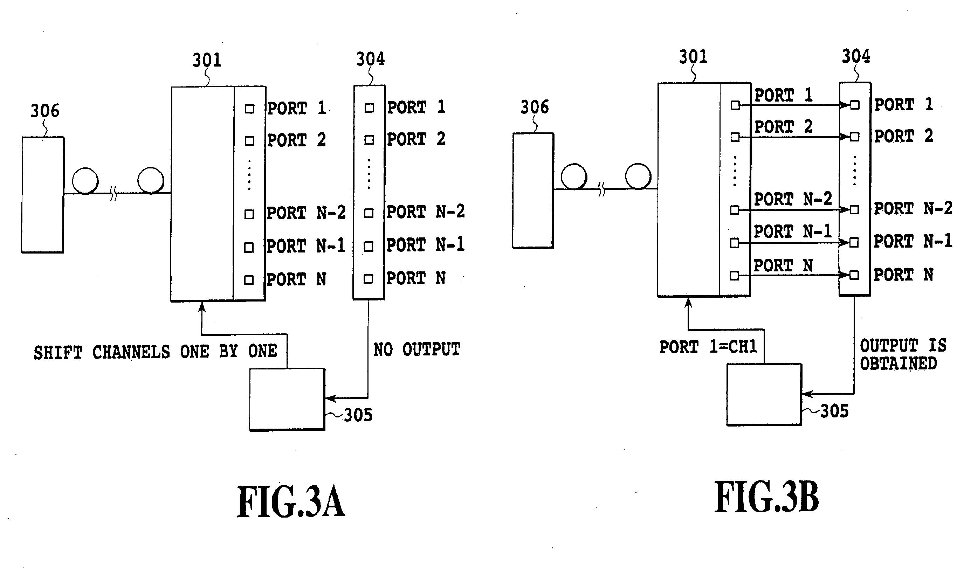

FIG.3A is a block diagram illustrating an optical time-division-multiplexed channel extraction apparatus of a third embodiment of the invention. This channel extraction apparatus comprises an optical time-division-demultiplexing unit 301 that separates the multiplexed signals sent from an irregular-intervals optical time-division-multiplexed signal generator 306 into as many as N channels, a data output unit 304 that has as many as N output ports numbered 1-N, and a channel controller 305 that controls the signal demultiplexing sequence in the optical time-division-demultiplexing unit 301.

The irregular-intervals optical time-division-multiplexing signal generator 306 conducts signal multiplexing so that the bit intervals between the N channels, namely, time intervals between channels are not the same. Specifically, with the interval between channel 1 and channel 2 being $\Delta t_1$, that between channel 2 and channel 2 $\Delta t_2$, that between channel 3 and channel 4 $\Delta t_3$, and that between channel N-1 and channel N $\Delta t_{N-1}$, at least one bit interval is different from the others. The irregular-intervals optical time-division-multiplexing signal generator 306 will be described again later.

In the optical time-division-demultiplexing unit 301, the bit intervals corresponding to the N channels are determined to match with the irregular intervals of the multiplexed signals. Thus, if as many as N channel numbers match with the output port numbers, all the ports provide output signals at the same time. On the other hand, if they do not match with each other, at least one port does not provide output signal. The channel controller 305 monitors the presence/absence of signal output in the data output unit 304, and controls the port-channel relations in the optical time-division-demultiplexing unit 301 so that all the ports provide output signals. Other controlling operations will be described later.

As demonstrated in FIG.3A, when at least one port of the N ports of the optical time-division-demultiplexing unit 301 does not provide output signal, the channel controller 305 shifts the channel demultiplexing sequence one by one in the optical time-division-demultiplexing unit 301. Then, it monitors the output from the output ports of the data output unit 304 again, and as shown in FIG.3B, it repeat the sequence shifting until all the output ports provide output. In this way, the numbers of output ports of the data output unit are matched with the channel numbers.

(First example of the optical time-division-demultiplexing unit)

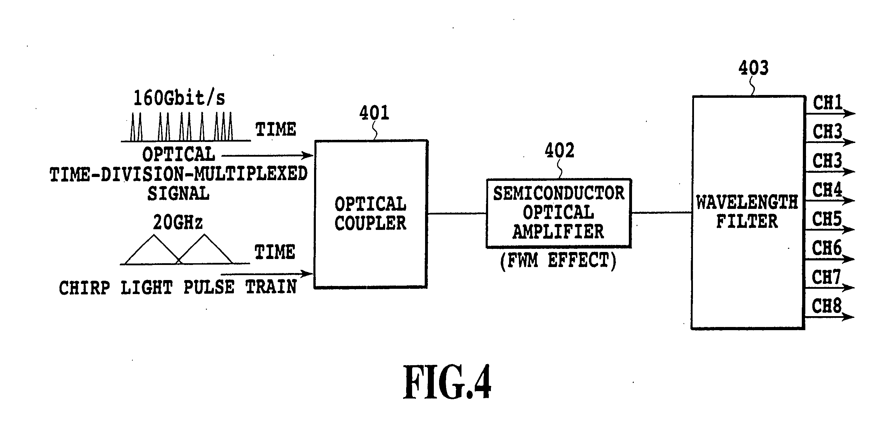

FIG.4 is a block diagram illustrating a first example of the optical time-division-demultiplexing unit. This is an example adopting four wave mixing(FWM) using a semiconductors optical amplifier as the optical time-division-demultiplexing method, in which optical signals of 160Gbit/s are divided into 20Gbit/s x 8 channels. The optical time-division-demultiplexing unit comprises an optical coupler 401 that couples multiplexed signals of 160Gbit/s and 20GHz chirp pulse train, a semiconductor amplifier 402 that amplifies the coupled signals, and a wavelength filter 403 that separates the signals into individual channels.

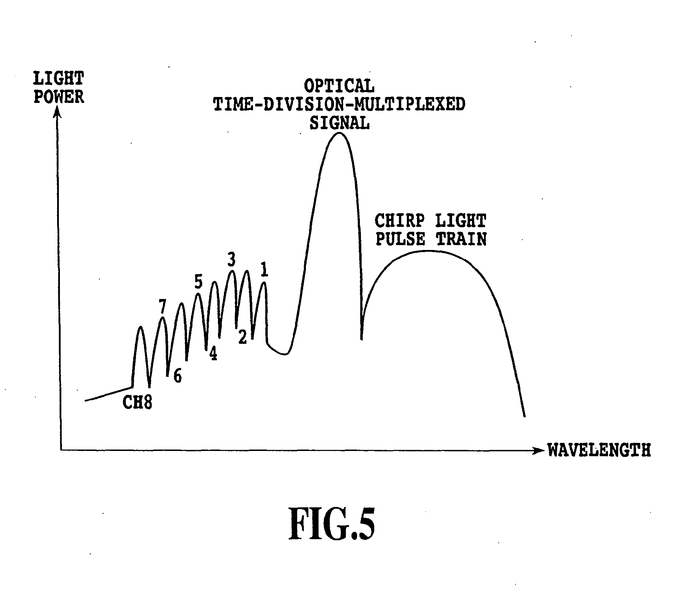

The semiconductor amplifier 402 provides FWM light of different wavelengths to individual channels, utilizing the FWM effect working between the multiplexed signals and chirp light pulses. FIG.5 shows an output spectrum of the semiconductor amplifier 402. The wavelength filter 403 can provide light signals for all the channels to the separate ports at a time by demultiplexing the converted FWM light into corresponding channels. Instead of the semiconductor amplifier 402, an optical fiber can be used.

(Second example of the optical time-division-demultiplexing unit)

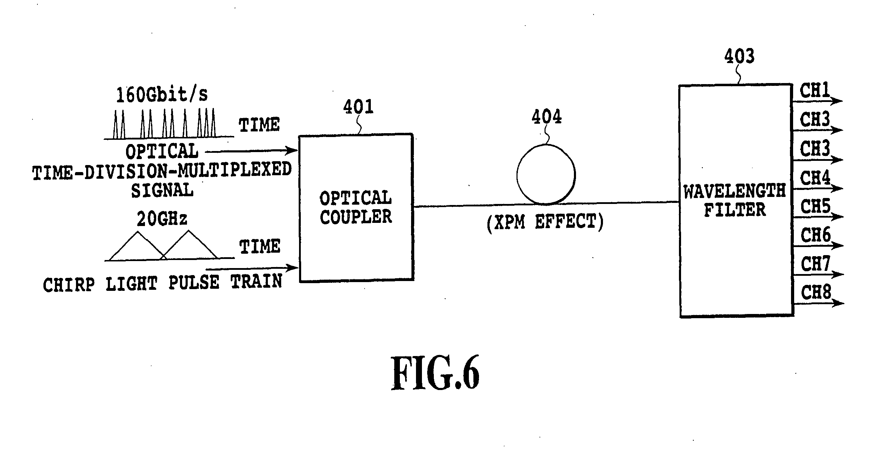

FIG.6 is a block diagram illustrating a second example of the optical time-division-demultiplexing unit. This is an example using the cross-phase modulation (XPM) in optical fiber, in which optical signals of 160Gbit/s are divided into 20Gbit/s x 8 channels. The optical time-division-demultiplexing unit comprises an optical coupler 401 that couples multiplexed signals of 160Gbit/s and 20GHz chirped pulse train, an optical fiber 404, and a wavelength filter 403 that separates the signals into individual channels.

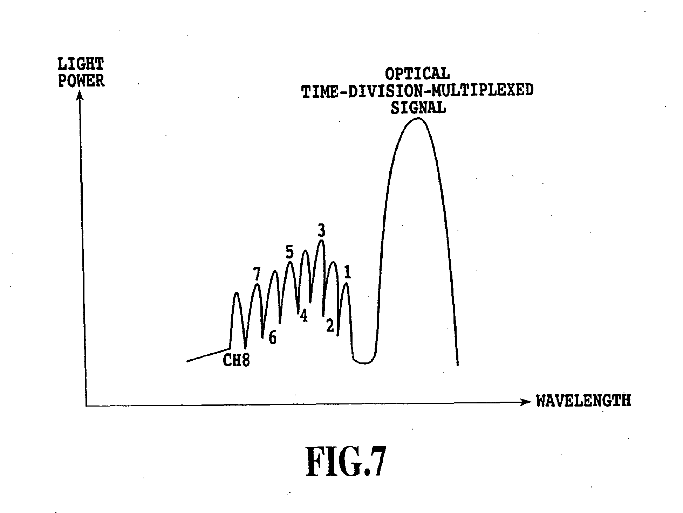

In the optical fiber 404, the overlap of multiplexed signals and chirped pulses on the time axis is replaced by the XPM effect with the peak in the spectrum of the chirped pulses for each channel. FIG.7 shows the output from the optical fiber 404. The wavelength filter 403 provides the optical signals of individual channels to corresponding output ports by demultiplexing the optical signals converted into different spectrum elements of chirped pulses.

The first and second examples may be used in the optical time-division-demultiplexing units of the first, second and third embodiments. The channels are identified, for example, based on channel wavelengths at the wavelength filter output. The control at the channel controller can be implemented by controlling the timing for coupling the chirped pulses and multiplexed signals.

In the first and second examples, because the time-division-multiplexed channels are converted into wavelength-division-multiplexed channels, the sequence of time-division-multiplexed channels is converted as it is into the order of wavelength in the wavelength-division-multiplexed channels. Either ascending or descending order is decided by the sign of chirped pulses. Then the relationship between time-division-multiplexed channels, namely their order, is decided uniquely. If the timing of coupling the multiplexed signals and chirped pulses is varied, the channel order with respect to the port number changes accordingly. In this way, the channel order can be uniquely decided.

In the case of the irregular-intervals multiplexed signal of the third embodiment, the converted wavelength intervals become irregular. If the wavelength filter is designed so that all channels can be separated by wavelength only when multiplexed signals and chirped pulses are coupled at a certain timing, then no output is provided from the wavelength filter when the coupling is made at a timing different from the given one and the channel number does not match with the port number. In this manner, the presence/absence of output in the ports can be used for channel control.

(Third example of the optical time-division-demultiplexing unit)

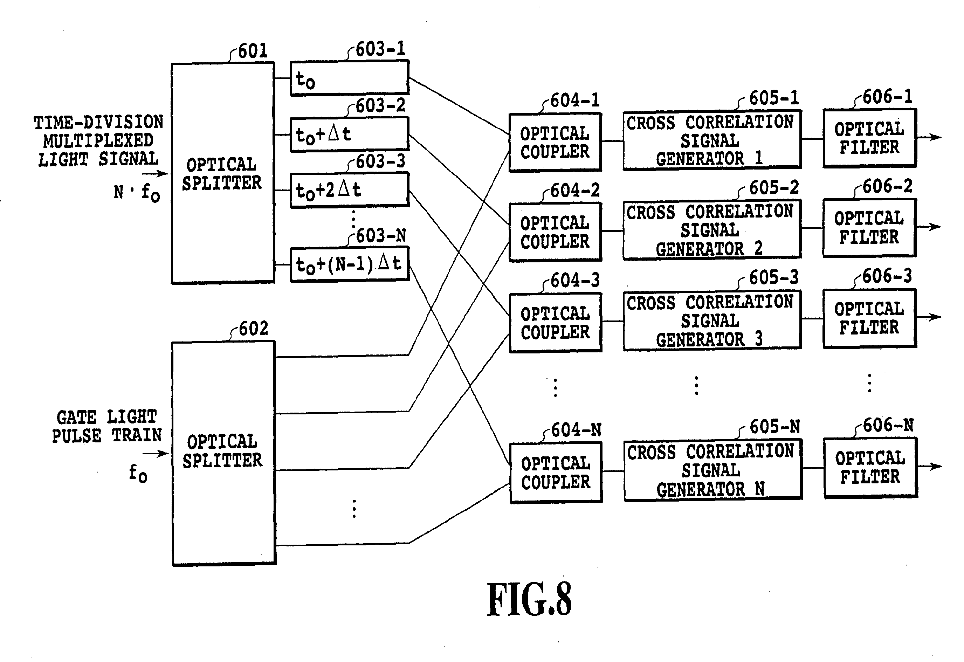

FIG.8 is a block diagram illustrating a third example of the optical time-division-demultiplexing unit; this is an example of a batch-type multi-output signal demultiplexing method. At a predetermined synchronized timing, the multiplexed signals (frequency $f_s$, bit rate $N \cdot f_o$) in which the light signals of N channels are multiplexed over time, and gate light pulse train (frequency $f_g$) of a repetition frequency $f_o$ are provided to splitters 601, 602.

The time-division-multiplexed light signals are branched into N channels by a optical time-division-demultiplexing unit 601, and then provided to couplers 604-1 to 604-N via delay circuits 603-1 to 603-N that delay signals by $\Delta t$ between signal bits. Meanwhile, the gate pulses are branched into N channels by a splitter 602 and provided to couplers 604-1 to 604-N. The couplers 604-1 to 604-N combine the multiplexed signals and gate pulses and provide them to cross-correlation signal generators 605-1 to 605-N.

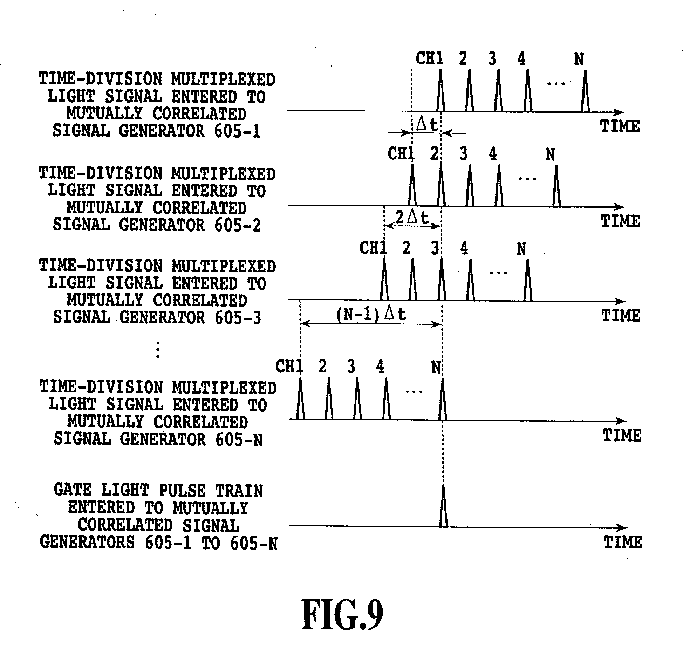

FIG.9 is a diagram illustrating the relations between the multiplexed signals and the gate light pulse train provided to the cross-correlation signal generators 605-1 to 605-N. Because the multiplexed signals are shifted by one bit($\Delta t$), the light signal of channel 1 and a gate light pulse are overlapped in the cross-correlation signal generator 605-1; the light signal of channel 2 and a gate light pulse are overlapped in the cross-correlation signal generator 605-2, and the same in the rest channels. As a result, the cross-correlation signal generators 605-1 to 605-N provide correlated signals for the individual channels. The correlated signals of the channels are separated by optical filters 606-1 to 606-N at a time. In this way, the multiplexed signals of N channels can be separated at a time.

If a four-wave-mixing (FWM) semiconductor amplifier is used as the cross-correlation signal generator 605, the cross-correlation signal is composed four light waves of a multiplexed signal and the gate light pulse. The optical filter 606 separates light frequency $f=2f_g-f_s$ or $f=2f_s-f_g$. If the cross-gain modulation (XGM) function of a semiconductor optical amplifier is used in the cross-correlation signal generator 605, the cross-correlation signal has the same frequency as the multiplexed light signal, and the optical filter 606 separates the wave of frequency $f=f_s$.

Semiconductor amplifiers occasionally pose a problem of pattern effects when cross-correlation signals are generated by four-wave mixing or cross-gain modulation. In such case, the carrier life is shortened in the semiconductor amplifier and pattern effects are reduced by adding assist light (CW light) to the multiplexed light signal or gate light pulse train before providing them to the optical amplifier.

If the cross absorption modulation (XAM) function of an electric field absorption type optical amplifier is used in the cross-correlation signal generator 605, since the cross-correlation signal and the multiplexed light signal have the same frequency, the optical filter 606 separates the light wave of frequency $f=f_s$. Meanwhile, if the sum frequency generation (SFG) effect of a secondary nonlinear optical material is used in the cross-correlation signal generator 605, the cross-correlation signal becomes light of a frequency which is the sum of the multiplexed signal and gate light pulse, and the optical filter 606 separates the light wave of a frequency $f=f_s+f_g$. Such secondary nonlinear optical materials include $LiNbO_3$, AANP and KTP.

If the differential frequency generation (DFG) effect of a secondary nonlinear optical material is used in the cross-correlation signal generator 605, the cross-correlation signal becomes light of a frequency which is the difference between the multiplexed signal and gate light pulse, and the optical filter 606 separates the light wave of a frequency $f=|f_s-f_g|$. Such secondary nonlinear optical materials include $LiNbO_3$, AANP and KTP.

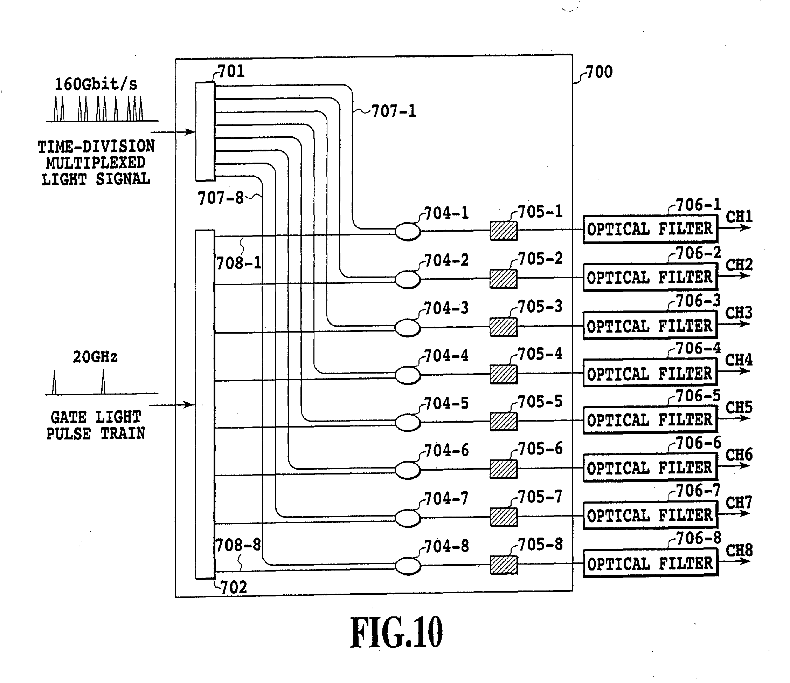

FIG.10 shows the circuit diagram of the third example of the optical time-division-demultiplexing unit. This optical time-division-demultiplexing unit separates the 160Gbit/s multiplexed light signals into 20Gbit/s x 8 channels, with a multiplexing degree N=8. The optical time-division-demultiplexing unit 101(201) comprises splitters 701, 702, waveguides 707, 708 equivalent to light delay circuits, couplers 704, cross-correlation signal generators 705 and filters 706, all integrated on a substrate 700.

The function of the delay circuits 603-1 to 603-8 shown in FIG.8 is realized in this example by changing the light path length of each of the waveguides 707-1 to 707-8 to which the splitter 701 and the couplers 704-1 to 704-8 are connected. The path lengths of the waveguides 708-1 to 708-8 to which the splitter 702 and couplers 704-1 to 704-8 are connected are set equal to each other. Then the timing to combine the gate light pulse and time-division multiplexed light signal is determined with high precision.

In this example, delay interval is incremented by $\Delta t$ in the order from 707-1 to 707-8 in the waveguides. Although the path length of the waveguide 707-1 differs from that of 708-1, the signal input timing is controlled so that the light signal of channel 1 and the gate light pulse overlap each other on the time axis in the cross-correlation signal generator 705-1. As a result, the light signals and gate pulses of channels 2-8 are overlapped on the time axis in the cross-correlation signal generator 705-2 to 705-8.

(Fourth example of the optical time-division-demultiplexing unit)

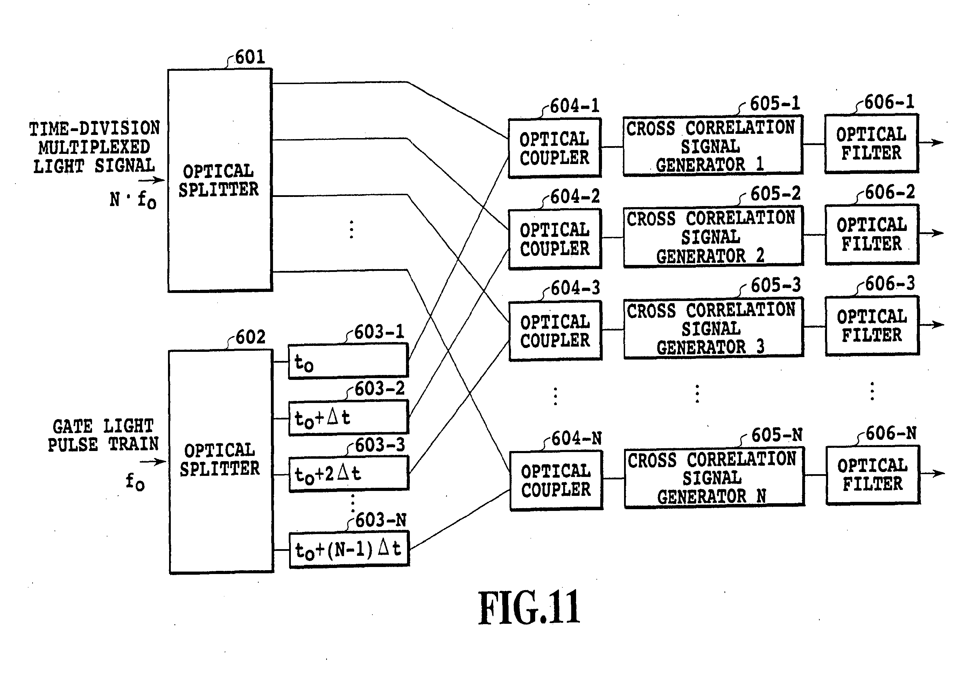

FIG.11 shows a fourth example of the optical time-division-demultiplexing unit, demonstrating an example of the batch-type multi-output signal demultiplexing method. The multiplexed light signals(of a frequency $f_s$) of a bit rate $N\cdot f_o$ in which N channels of light signals are multiplexed over time are branched into N channels by a splitter 601 and then provided to couplers 604-1 to 604-N. Meanwhile, the gate pulse train(of a frequency fg) with a repetition frequency $f_o$ are branched into N channels by a splitter 602, and provided to couplers 604-1 to 604-N via delay circuits 603-1 to 603-N that delay signals by $\Delta t$ per bit. The couplers 604-1 to 604-N combine multiplexed signals and gate light pulses, and provide them to the cross-correlation signal generator 605-1 to 605-N.

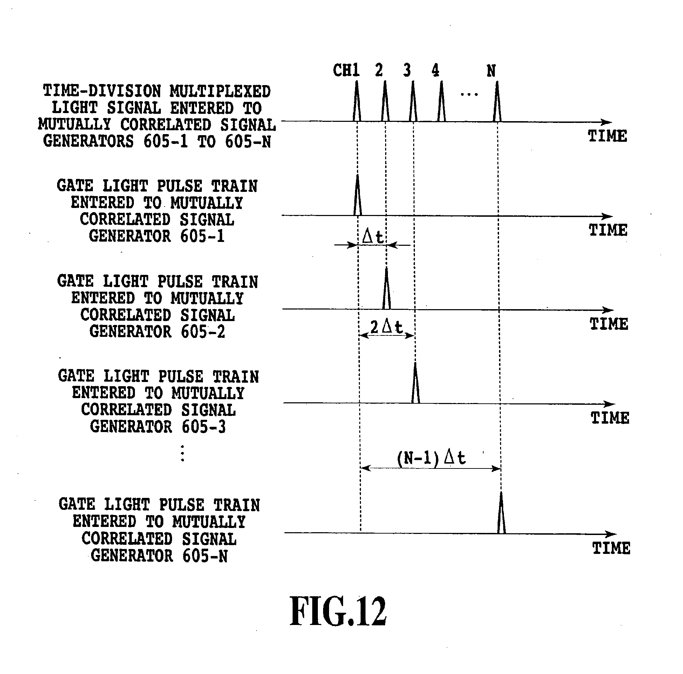

FIG.12 is a diagram illustrating the relations between the multiplexed signals and the gate light pulse train provided to the cross-correlation signal generators 605-1 to 605-N. Because the gate pulses are shifted by one bit ($\Delta t$), the light signal of channel 1 and a gate light pulse are overlapped in the cross-correlation signal generator 605-1; the light signal of channel 2 and a gate light pulse are overlapped in the cross-correlation signal generator 605-2, and the same in the rest channels. As a result, the cross-correlation signal generators 605-1 to 605-N provide cross-correlation signals for the individual channels. The cross-correlation signals of the individual channels are separated by optical filters 606-1 to 606-N at a time. In this way, the multiplexed signals of N channels can be separated at a time.

In the cross-correlation signal generator 605, a four-wave-mixing (FWM) semiconductor amplifier, XGM semiconductor amplifier, XAM type amplifier, SFG of a secondary nonlinear optical material, and DFG of a secondary nonlinear optical material may be used so that the optical filters 606 separate the light signals corresponding to the individual cross-correlation signal generators.

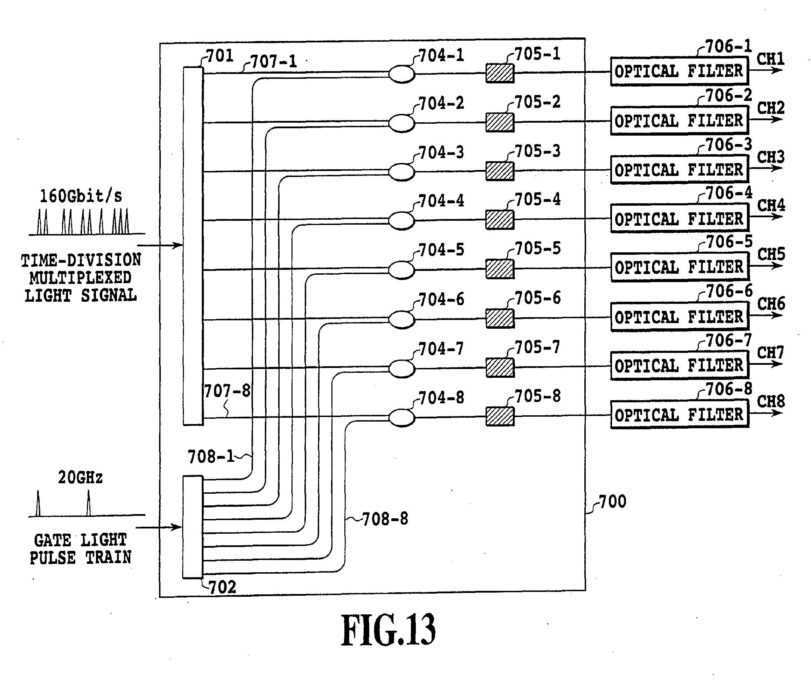

FIG.13 shows the circuit diagram of the fourth example of the optical time-division-demultiplexing unit. This optical time-division-demultiplexing unit separates the 160Gbit/s multiplexed light signals into 20Gbit/s x 8 channels, with a multiplexing degree N=8. The optical time-division-demultiplexing unit 101(201) comprises splitters 701, 702, light waveguides 707, 708 equivalent to light delay circuits, couplers 704, cross-correlation signal generators 705 and filters 706, all integrated on a substrate 700.

The function of the delay circuits 603-1 to 603-8 shown in FIG.11 is realized in this example by changing the light path length of each of the waveguides 708-1 to 708-8 to which the splitter 702 and the couplers 704-1 to 704-8 are connected. The path lengths of the waveguides 707-1 to 707-8 to which the splitter 701 and couplers 704-1 to 704-8 are connected are set equal to each other. Then the timing to combine the gate light pulse and time-division multiplexed light signal is determined with high precision.

In this example, delay interval is decremented by $\Delta t$ in the order from 708-1 to 708-8 in the light waveguides. Although the path length of the waveguide 707-1 differs from that of 708-1, the signal input timing is controlled so that the light signal of channel 1 and the gate light pulse overlap each other on the time axis in the cross-correlation signal generator 705-1. As a result, the light signals and gate pulses of channels 2-8 are overlapped on the time axis in the cross-correlation signal generator 705-2 to 705-8.

(Fifth example of the optical time-division-demultiplexing unit)

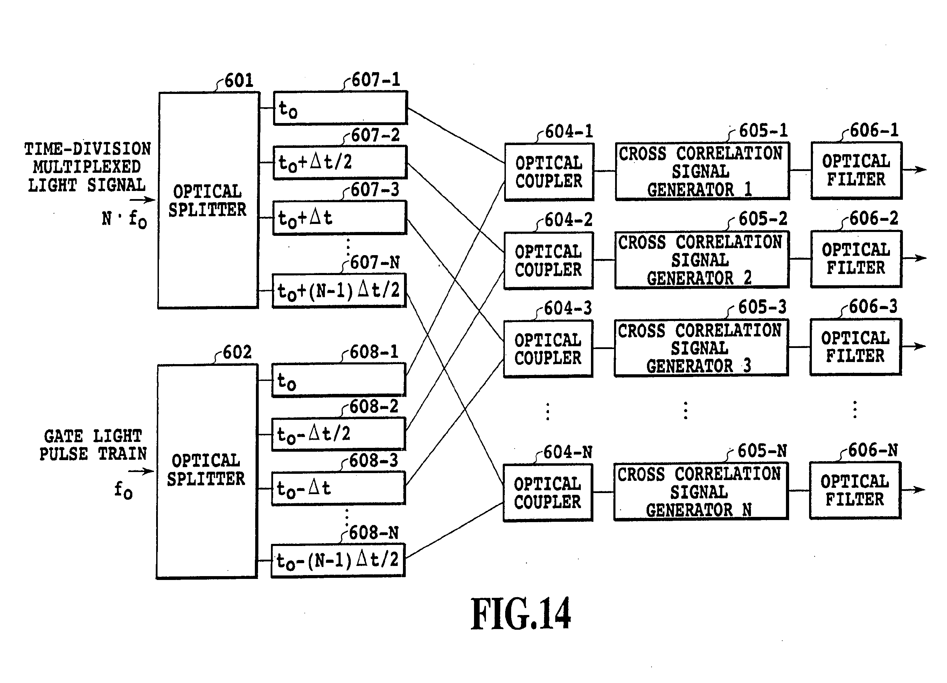

FIG.14 shows a fifth example of the optical time-division-demultiplexing unit, demonstrating an example of the batch type multi-output signal demultiplexing method. The multiplexed light signals(of a frequency $f_s$) of a bit rate $N \cdot f_o$ in which N channels of light signals are multiplexed over time are branched into N channels by a splitter 601 and then provided to couplers 604-1 to 604-N via delay circuits 607-1 to 607-N that produce a delay $\Delta t/2$ per 1/2 bit. Meanwhile, the gate pulse train(of a frequency fg) with a repetition frequency $f_o$ are branched into N channels by a splitter 602, and provided to couplers 604-1 to 604-N via the delay circuits 608-1 to 608-N that delay signals by -$\Delta t/2$ per 1/2bit in the reverse direction. The couplers 604-1 to 604-N combine multiplexed signals and gate light pulses and provide them to the cross-correlation signal generator 605-1 to 605-N.

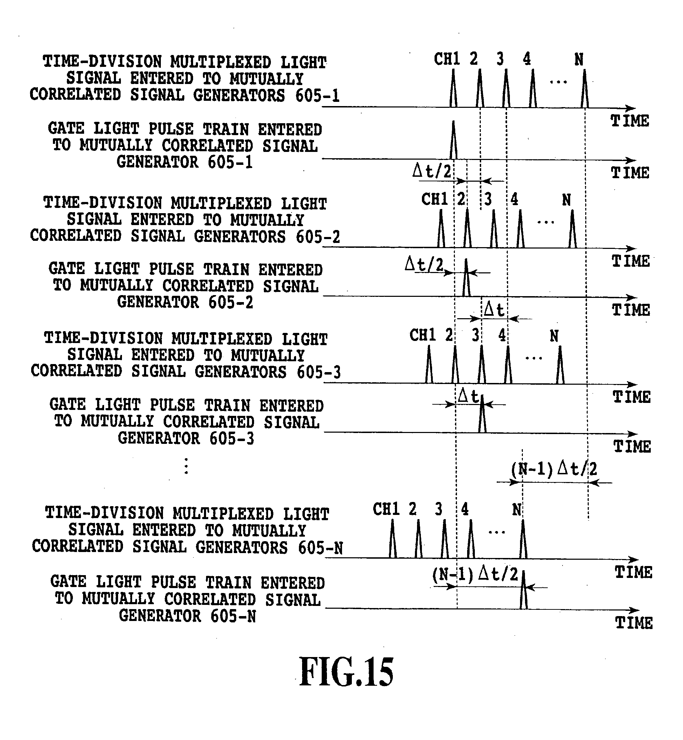

FIG.15 is a diagram illustrating the relations between the multiplexed signals and the gate light pulse train provided to the cross-correlation signal generators 605-1 to 605-N. Because the multiplexed signals and gate pulses are shifted by one bit (At), the light signal of channel 1 and a gate light pulse are overlapped in the cross-correlation signal generator 605-1; the light signal of channel 2 and a gate light pulse are overlapped in the cross-correlation signal generator 605-2, and the same in the rest channels. As a result, the cross-correlation signal generators 605-1 to 605-N provide cross-correlation signals for the individual channels. The cross-correlation signals of the individual channels are separated by optical filters 606-1 to 606-N at a time. In this way, the multiplexed signals of N channels can be separated at a time.

In the cross-correlation signal generator 605, a four-wave-mixing (FWM) semiconductor amplifier, XGM semiconductor amplifier, XAM type amplifier, SFG of a secondary nonlinear optical material, and DFG of a secondary nonlinear optical material may be used, so that the optical filters 606 separate the light signals corresponding to the individual cross-correlation signal generators.

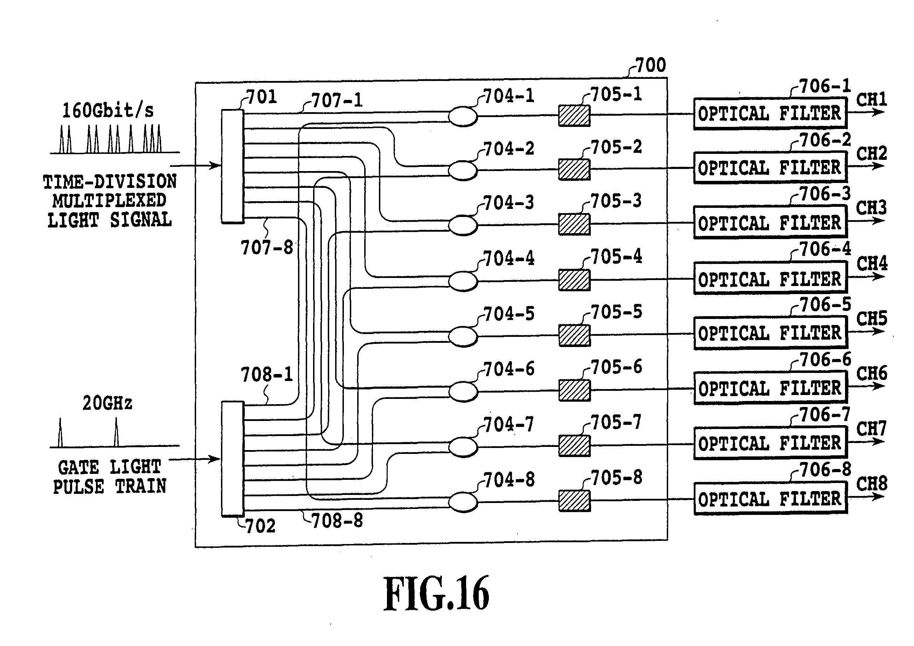

FIG.16 shows the circuit diagram of the fifth example of the optical time-division-demultiplexing unit. This optical time-division-demultiplexing unit separates the 160Gbit/s multiplexed light signals into 20Gbit/s x 8 channels, with a multiplexing degree N=8. The optical time-division-demultiplexing unit 101(201) comprises splitters 701, 702, light waveguides 707, 708 equivalent to light delay circuits, couplers 704, cross-correlation signal generators 705 and filters 706, all integrated on a substrate 700.

The function of the delay circuits 607-1 to 607-8 shown in FIG.14 is realized in this example by changing the light path length of each of the waveguides 707-1 to 707-8 to which the splitter 701 and the couplers 704-1 to 704-8 are connected. The function of the delay circuits 608-1 to 608-8 shown in FIG.14 is realized by changing the light path length of each of the waveguides 708-1 to 708-8 that connect the splitter 702 and the couplers 704-1 to 704-8. Then the timing to combine the gate light pulse and time-division multiplexed light signal is determined with high precision.

In this embodiment, delay interval is incremented by $\Delta t/2$ in the order from 707-1 to 707-8 in the waveguides, while decremented by At/2 in the order from 708-1 to 708-8. Although the path length of the waveguide 707-1 differs from that of 708-1, the signal input timing is controlled so that the light signal of channel 1 and the gate light pulse overlap each other on the time axis in the cross-correlation signal generator 705-1. As a result, the light signals and gate pulses of channels 2-8 are overlapped on the time axis in the cross-correlation signal generator 705-2 to 705-8.

As described in the third, fourth and fifth examples of the optical time-division-demultiplexing unit, the assist light (CW light) unit for reducing the pattern effect and optical couplers that combines multiplexed signals and gate light pulses can be integrated in the substrate 700. The substrate 700 may be a quartz substrate, semiconductor substrate or ceramic substrate, on which quartz waveguides, semiconductor waveguides or ceramic waveguides may be formed. By forming the cross-correlation signal generator so as to be independent of polarity, fluctuations due to polarity difference between multiplexed signals and gate light pulses can be removed.

Next described is the way of extracting channels. Channels can be distinguished from each other by (1)dividing the time-division multiplexed light signals into N channels, converting the light signal in one or more channels into electric signal, and reading data from the converted electric signal; or by (2) overlapping a sub-carrier on part of the channels, transmitting all marks or conducting dispersion-multiplexing or code-division-multiplexing to recognize the sub-carrier, mark ratio or dispersion-multiplexed or code-division multiplexed signals.

Channel control is implemented by shifting the timing of multiplexed signals from that of gate light pulses used for signal demultiplexing sequence. The function of branching light signals and gate light pulses into N channels, providing different delay times for gating of different bit data can be incorporated in the PLG waveguide and semiconductor waveguide. The order of channel numbers for signal demultiplexing sequence can be uniquely decided by such a waveguide. If the timing of gate light pulses is shifted from that of light signals, the channel order corresponding to the output ports changes accordingly. Thus the channels for signal demultiplexing sequence can be controlled.

The third, fourth and fifth examples have been adopted in the first and second embodiments. If the delay times given by the delay circuits 603-1 to 603-N are made irregular, they can also be used in the third embodiment.

(Example of the irregular-intervals optical time-division-multiplexed signal generator)

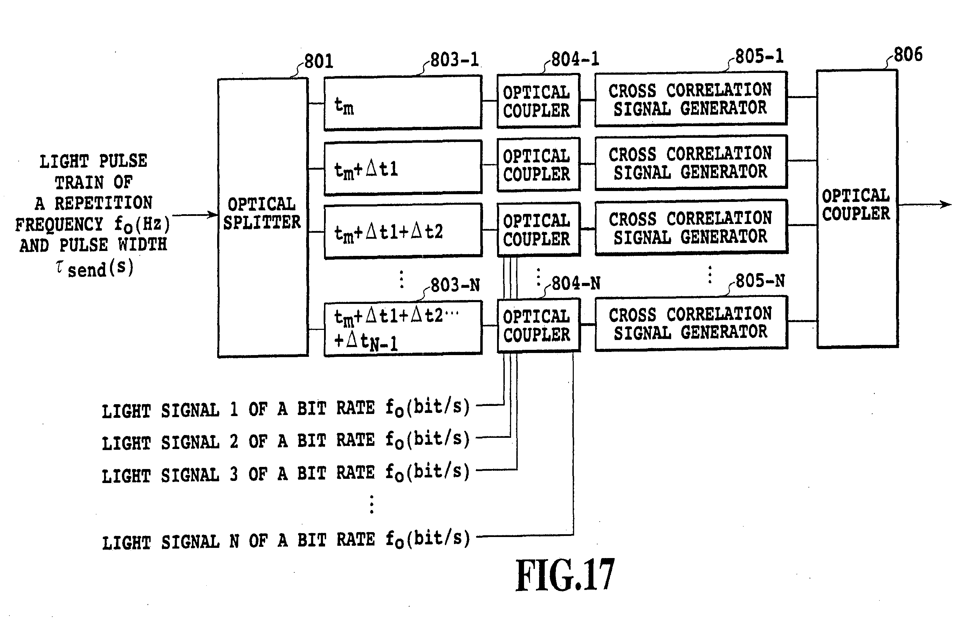

FIG.17 shows an example of the irregular-intervals optical time-division-multiplexed signal generator. The irregular-intervals optical time-division-multiplexed signal generator 306 conducts signal multiplexing by giving irregular intervals to multiplexed bit data of N channels. With $\Delta t_1$ the interval between channel 1 and channel 2, $\Delta t_2$ that between channel 2 and channel 3, $\Delta t_3$ that between channel 3 and channel 4, and $\Delta t_{N-1}$ that between channel N-1 and channel N;

$$\tau_{send} \leq 1/(Nf_o)$$

$$\Delta t_1 + \Delta t_2 + \ldots + \Delta t_{N-1} + \Delta t_N = 1/f_o.$$

$\Delta t$ is decided so that at least one combination of i and j meets the requirement $\Delta t_i(i=1, 2, ..., N) \neq \Delta t_j(j=1, 2, ..., N)$ $(i \neq j)$ in the invention.

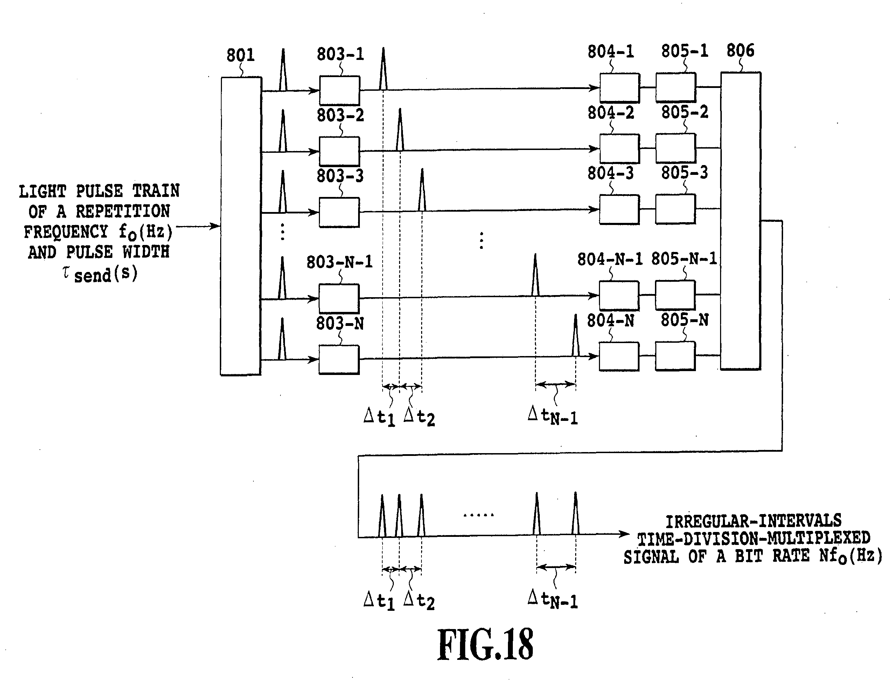

In other words, at least one bit interval is different from the others during signal multiplexing. FIG.18 is a timing chart schematically illustrating the time-division-multiplexing, in which the timing chart meeting a requirement $\Delta t_1 < \Delta t_2 < ... < \Delta t_{N-1} < \Delta t_N$ is shown as an example. In this example, generation of signals correlated with light signals of a bit rate $f_o$ is described as a method of optical modulation. However, another modulation method that modulates light pulses with electric signals of a bit rate $f_o$ can be employed. The optical signal demultiplexing unit 301 can demultiplex the signals generated by the irregular-intervals time-division-multiplexing and provide the demultiplexed signals to all the output ports at a time.

Alternatively, the time intervals may be controlled to meet $\Delta t_i(i=1, 2, ..., N) \neq \Delta t_j(j=i+1$ or $j=i-1)$, $\Delta t_{N+1}=\Delta t_1$, $\Delta t_{-1}=\Delta t_N$.

(Sixth example of the optical time-division-demultiplexing unit)

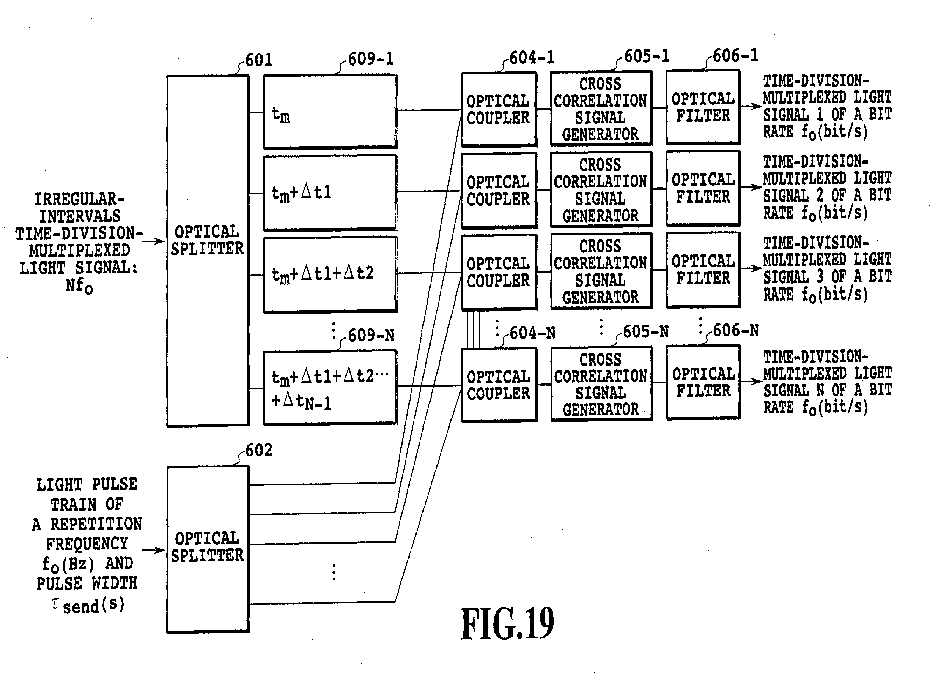

FIG.19 shows a sixth example of the optical time-division optical time-division-demultiplexing unit, illustrating the structure of an optical time-division-demultiplexing unit 301 applicable to irregular-intervals time-division multiplexed signals. This has the same structure as that of FIG.8, and the delay times are set in the delay circuits 609-1 to 609-N, corresponding to the bit intervals in the irregular-intervals time-division multiplexed signals.

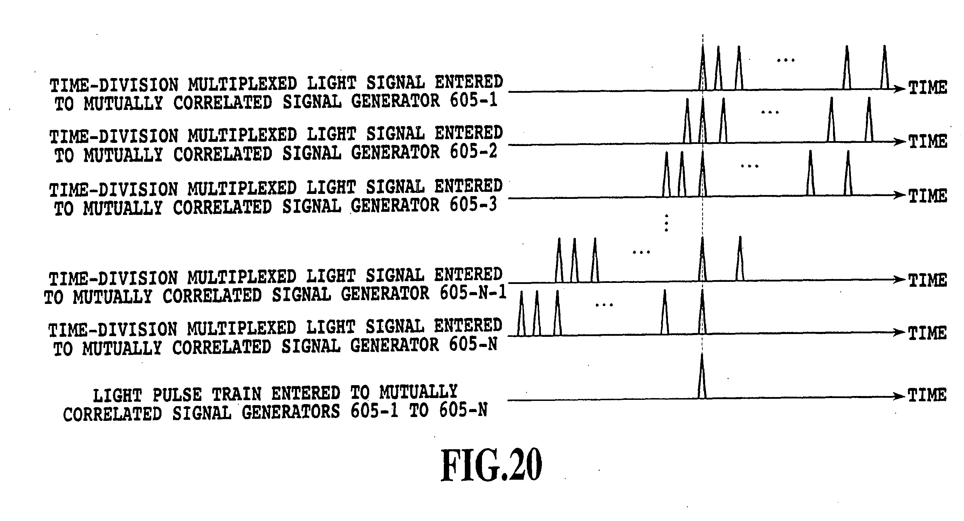

FIG.20 is a diagram illustrating the relations between the multiplexed signals and the gate light pulse train provided to the cross-correlation signal generators 605-1 to 605-N. The irregular-intervals multiplexed signals are branched by the splitter 601 into N channels, and they are given predetermined delays in the delay circuits 609-1 to 609-N. On the other hand, the gate light pulses are branched by the splitter 602 into N channels and provided with no delay to the optical couplers 604-1 to 604-N. The couplers 604-1 to 604-N couple the multiplexed signals and gate light pulses at the timing shown in FIG.20. The cross-correlation signal generators 605-1 to 605-N provide cross-correlation signals to the individual channels at the same time. The cross-correlation signals are separated by the optical filters 606-1 to 606-N at a time, and the multiplexed signals of N channels can be separated and provided to output ports at a time.

Because the irregular-intervals time-division multiplexed signals are delayed so that they can be separated at a time, the output ports of the optical signal demultiplexing unit does not provide outputs for all the N channels if the timing of coupling with the gate light pulses differs from the prescribed one. This is because such a timing shift makes the signals of the entire channels shift by the same amount. In other words, at least one port of the N ports of the optical signal demultiplexing unit 301 does not provide output. The timing of coupling with the gate light pulses is shifted by one channel at a time, while the outputs from the ports of the signal demultiplexing unit are monitored. Then at a certain coupling timing, all the output ports receive demultiplexed signals at the same time.

In the optical signal demultiplexing unit of FIG.19, the delay circuits are connected to the splitter 601 like the case of FIG.8. However, the delay circuit may be connected to the splitter 602 as is the case with FIG.11, or otherwise, as is the example of FIG.14, the delay circuits may be connected to both splitters 601, 602 to separate signals in different channels. Aspects of the foregoing disclosure are set out in the following numbered clauses:

1. A time-division-multiplexed light signal channel extraction method that separates the multiplexed signals into as many as N channels and extracts the channel numbers in order to provide the demultiplexed signals to the output ports of which port numbers match with the channel numbers, comprising:

   a demultiplexing step of demultiplexing the multiplexed signals into N channels and providing the demultiplexed signals to as many as N separate ports;
   an extraction step of extracting the channel number of at least one channel in the N channels corresponding to said N separate ports;
   a switching step of switching the N channels to the output ports of which port numbers uniquely match with the numbers of the N channels based on the relationship between the number of the one channel identified in the extraction step and the output port number corresponding to said one channel number; and
   an output step of providing the signals of said switched N channels to the output ports of which output port numbers match with the channel numbers.

2. A time-division-multiplexed light signal channel extraction method that separates the multiplexed signals into as many as N channels and extracts the channel numbers in order to provide the demultiplexed signals to the output ports of which port numbers match with the channel numbers, comprising:

   a demultiplexing step of demultiplexing the multiplexed signals into N channels and providing the demultiplexed signals to as many as N separate ports;
   an extraction step of extracting the channel number of at least one channel in the N channels corresponding to said N separate ports;
   a control step of controlling the signals of said N channels provided to the separate ports so that the N channel numbers uniquely match with the output port numbers based on the relationship between the number of the one channel identified in the extraction step and the output port number corresponding to said one channel number; and
   an output step of providing the signals of said switched N channels to the output ports of which output port numbers match with the channel numbers.

3. A time-division-multiplexed light signal channel extraction method that separates the multiplexed signals into as many as N channels and extracts the channel numbers in order to provide the demultiplexed signals to the output ports of which port numbers match with the channel numbers, comprising:

   a demultiplexing step of demultiplexing the irregular-intervals time-division-multiplexed light signals, of which channel intervals on the time axis are not regular, into N channels and providing the demultiplexed signals to as many as N separate ports of the same intervals as those of the channels, wherein, when the numbers of the N channels match with the numbers of the output ports, the signals are provided to all the N separate ports;
   a control step of monitoring the signal output to the output ports and controlling the signals of said N channels provided to the separate ports so that all the N separate ports receive signal output; and
   an output step of providing the signals of said switched N channels to the output ports of which output port numbers match with the channel numbers.

4. The method as set forth in clause 3, wherein, when the i-th channel is adjacent to the (1+1)-th channel, the N-th channel is adjacent to the first channel, the bit rate is Nfo(bit/s), the pulse width is $\tau_{send}$sec, the channel intervals meet the relations $\tau_{send} \leq 1/(Nf_o)$ and $\Delta t_1 + \Delta t_2 + ... + \Delta t_{N-1} + \Delta t_N = 1/f_o$, said irregular-intervals time-division-multiplexed light signals meet the relation $\Delta t_i(i=1, 2,..., N) \neq \Delta t_j(j=1, 2,..., N)$ $(j \neq i)$.

5. The method as set forth in clause 4, wherein the channel intervals meet the relations:

$$\Delta t_i(i=1, 2,..., N) \neq \Delta t_j(j=i+1 \text{ or } j=i-1);$$

$$\Delta t_{N+1}=\Delta t_1;$$

and

$$\Delta t_{-1}=\Delta t_N.$$

6. A time-division-multiplexed light signal channel extraction apparatus that separates the multiplexed signals into as many as N channels and extracts the channel numbers in order to provide the demultiplexed signals to the output ports of which port numbers match with the channel numbers, comprising:

an optical time-division-demultiplexing means for demultiplexing the multiplexed signals into N channels and providing the demultiplexed signals to as many as N separate ports;
a channel extraction means that is connected to the N separate ports and extracts the channel number of at least one channel in the N channels corresponding to said N separate ports;
a channel switching means for switching the N channels to the output ports of which port numbers uniquely match with the numbers of the N channels based on the relationship between the number of the one channel identified by the channel extraction means and the output port number corresponding to said one channel number; and
an output means that has as many as N output ports and provides the signals of said switched N channels to the output ports of which output port numbers match with the channel numbers.

7. A time-division-multiplexed light signal channel extraction apparatus that separates the multiplexed signals into as many as N channels and extracts the channel numbers in order to provide the demultiplexed signals to the output ports of which port numbers match with the channel numbers, comprising:

an optical time-division-demultiplexing means for demultiplexing the multiplexed signals into N channels and providing the demultiplexed signals to as many as N separate ports;
a channel extraction means that is connected to the N separate ports and extracts the channel number of at least one channel in the N channels corresponding to said N separate ports;
a channel control means for controlling the signals of said N channels provided to the separate ports so that the N channel numbers uniquely match with the output port numbers based on the relationship between the number of the one channel identified by the channel extraction means and the output port number corresponding to said one channel number; and
an output means that has as many as N output ports and provides the signals of said switched N channels to the output ports of which output port numbers match with the channel numbers.

8. A time-division-multiplexed light signal channel extraction apparatus that separates the multiplexed signals into as many as N channels and extracts the channel numbers in order to provide the demultiplexed signals to the output ports of which port numbers match with the channel numbers, comprising:

a optical time-division-demultiplexing means for demultiplexing the irregular-intervals time-division-multiplexed light signals, of which channel intervals on the time axis are not regular, into N channels and providing the demultiplexed signals to as many as N separate ports of the same intervals as those of the channels, wherein, when the numbers of the N channels match with the numbers of the output ports, the signals are provided to all the N separate ports;
a channel control means for monitoring the signal output to the output ports and controlling the signals of said N channels provided to the separate ports so that all the N separate ports receive signal output; and
an output means that has as many as N output ports and provides the signals of said switched N channels to the output ports of which output port numbers match with the channel numbers.

9. The apparatus as set forth in any one of clauses 6-8; wherein said optical time-division-demultiplexing means comprising:

a means for coupling the multiplexed signals and chirp light pulses; and
a cross-correlating means for providing a cross-correlation signal when the multiplexed signal overlaps the chirp light pulse and converting the sequence of the N channels for multiplexed signals on the time axis into the unique sequence of channels on the wavelength axis to provide the demultiplexed signals to the N separate channels.

10. The apparatus as set forth in clause 9, wherein said cross-correlating means provides a cross-correlation signal by using one of the four wave mixing using a semiconductor amplifier, cross phase modulation using optical fiber, cross absorption modulation using an electric field absorption type optical amplifier and quasi-phase matching in secondary nonlinear optical material.

11. The apparatus as set forth in any one of clauses 6-8; wherein said optical time-division-demultiplexing means comprising:

a coupling means that provides different delays to at least either the multiplexed signals separated into N channels or the gate light pulses separated into N channels so that the signals and pulses overlap at different timing in the individual channels; and
as many as N cross-correlating means for providing a cross-correlation signal when the multiplexed signal overlaps the chirp light pulse.

12. The apparatus as set forth in clause 11, wherein said cross-correlating means provides a cross-correlation signal by using one of the four wave mixing using a semiconductor amplifier, cross phase modulation using optical fiber, cross absorption modulation using an electric field absorption type optical amplifier and quasi-phase matching in secondary nonlinear optical material.

13. The apparatus as set forth in clause 8, wherein, when the i-th channel is adjacent to the (i+1)-th channel, the N-th channel is adjacent to the first channel, the bit rate is Nfo(bit/s), the pulse width is $\tau_{send}$sec, the channel intervals meet the relations $\tau_{send} \leq 1/(Nf_o)$ and $\Delta t_1+\Delta t_2+...+\Delta t_{n-1}+\Delta t_N = 1/f_o$, said irregular-intervals time-division-multiplexed light signals meet the relation $\Delta t_i(i=1, 2,..., N) \neq \Delta t_j(j=1, 2,..., N)$ $(j\neq i)$.

14. The apparatus as set forth in clause 13, wherein the channel intervals meet the relations:

$$\Delta t_i(i=1, 2,..., N) \neq \Delta t_j(j=i+1 \text{ or } j=i-1);$$

$$\Delta t_{N+1}=\Delta t_1;$$

and

$$\Delta t_{-1}=\Delta t_N.$$

## Claims

1.  A time-division-multiplexed light signal channel extraction method that separates the multiplexed signals into as many as N channels and provides the demultiplexed signals to output ports of which port numbers match with the channel numbers, comprising:

a demultiplexing step of demultiplexing the irregular-intervals time-division-multiplexed light signals, of which channel intervals on the time axis are not regular, into N channels and providing the demultiplexed signals to as many as N separate ports having port intervals corresponding to the channels intervals, wherein, when the numbers of the N channel match with the numbers of the output ports, the signals are provided to all the N separate ports;
a control step of monitoring the signal output to the output ports and controlling the signals of said N channels provided to the separate ports so that all the N separate ports receive signal output; and
an output step of providing the signals of said N channels to the output ports of which output port numbers match with the channel numbers.

2. The method as set forth in claim 1, wherein the pulse width of said irregular-intervals time-division-multiplexed light signals $\tau_{send}$sec, where the i-th channel is adjacent to the (i+1)-th channel, the N-th channel is adjacent to the first channel, the bit rate is $Nf_0$(bit/s), the channel intervals satisfy the following inequality:

$$\Delta t_i (i=1,\ 2,\ldots,\ N)\ \neq\ \Delta t_j (j=1,\ 2,\ldots,\ N)\,(j\ \neq\ i)$$

where

$$\tau_{send}\ \leq\ 1/(Nf_0)\ \ \text{and}\ \ \Delta t_1 + \Delta t_2 + \ldots + \Delta t_{N-1} + \Delta t_N\ =\ 1/f_0.$$

3. The method as set forth in claim 1, wherein the pulse width of said irregular-intervals time-division-multiplexed light signals is $\tau_{send}$sec, where the i-th channel is adjacent to the (i+1)-th channel, the N-th channel is adjacent to the first channel, the bit rate is $Nf_0$(bit/s, the channel intervals satisfy the following inequality:

$$\Delta t_i (i=1,\ 2,\ldots,\ N)\ \neq\ \Delta t_j (j=i+1\ \text{or}\ j=i-1);$$

$$\Delta t_{N+1} = \Delta t_1;$$

and

$$\Delta t_{-1} = \Delta t_N$$

where

$$\tau_{send}\ \leq\ 1/(Nf_0)\ \ \text{and}\ \ \Delta t_1 + \Delta t_2 + \ldots + \Delta t_{N-1} + \Delta t_N\ =\ 1/f_0$$

4. A time-division-multiplexed light signal channel extraction apparatus that separates the multiplexed signals into as many as N channels and provide the demultiplexed signals to the output ports of which port numbers match with the channel numbers, comprising:

a optical time-division-demultiplexing means (301) for demultiplexing irregular-intervals time-division-multiplexed light signals, of which channel intervals on the time axis are not regular, into N channels and providing the demultiplexed signals to as many as N separate ports having port intervals corresponding to the channel intervals, wherein, when the numbers of the N channels match with the numbers of the output ports, the signals are provided to all the N separate ports;
a channel control means (305) for monitoring the signal output to the output ports and controlling the signals of said N channels provided to the separate ports so that all the N separate ports respectively output the signal output; and
an output means (304) that has as many as N output ports and provides the signals of said N channels to the output ports of which output port numbers match with the channel numbers.

**5.** The apparatus as set forth in any one of claims 6-8; wherein said optical time-division-demultiplexing means comprises:

a coupling means (401) for coupling the multiplexed signals and chirp light pulses; and
a cross-correlating means (402; 404) for providing a cross-correlation signal when the multiplexed signal overlaps the chirp light pulse and converting the sequence of the N channels for multiplexed signals on the time axis into the unique sequence of channels on the wavelength axis to provide the demultiplexed signals to the N separate channels.

**6.** The apparatus as set forth in claim 9, wherein said cross-correlating means (402; 404) provides a cross-correlation signal by using one of the four wave mixing using a semiconductor amplifier, cross phase modulation using optical fibre, cross absorption modulation using an electric field absorption type optical amplifier and quasi-phase matching in secondary nonlinear optical material.

**7.** The apparatus as set forth in any one of claims 6-8; wherein said optical time-division-demultiplexing means comprising:

a coupling means (604-1 to 604-N) that provides different delays to at least either the multiplexed signals separated into N channels or the gate light pulses separated into N channels so that the signals and pulses overlap at different timing in the individual channels; and
as many as N cross-correlating means (605-1 to 605-N) for providing a cross-correlation signal when the multiplexed signal overlaps a gate light pulse.

**8.** The apparatus as set forth in claim 11, wherein said cross-correlating means provides a cross-correlation signal by using one of the four wave mixing using a semiconductor amplifier, cross phase modulation using optical fibre, cross absorption modulation using an electric field absorption type optical amplifier and quasi-phase matching in secondary nonlinear optical material.

**9.** The apparatus as set forth in claim 8, wherein the pulse width of said irregular-intervals time-division-multiplexed light signals is $\tau_{send}$sec, where the i-th channel is adjacent to the (i+1)-th channel, the N-th channel is adjacent to the first channel, the bit rate is $Nf_0$(bit/s), the channel intervals meet the relations:

$$\Delta t_i(i=1, 2,..., N) \neq \Delta t_j(j=1, 2,..., N)(j \neq i)$$

where

$$\tau_{send} \leq 1/(Nf_0) \text{ and } \Delta t_1 + \Delta t_2 + ... + \Delta t_{N-1} + \Delta t_N = 1/f_0.$$

**10.** The apparatus as set forth in claim 8, wherein the pulse width of said irregular-intervals time-division-multiplexed light signals is $\tau_{send}$sec, where the i-th channel is adjacent to the (i+1)-th channel, the N-th channel is adjacent to the first channel, the bit rate is $Nf_0$(bit/s), the channel intervals satisfy the following inequality:

$$\Delta t_i(i=1, 2,..., N) \neq \Delta t_j(j=i+1 \text{ or } j=i-1);$$

$$\Delta t_{N+1} = \Delta t_1;$$

and

$$\Delta t_{-1} = \Delta t_N$$

where

$$\tau_{send} \leq 1/(Nf_0) \quad \text{and} \quad \Delta t_1 + \Delta t_2 + \ldots + \Delta t_{N-1} + \Delta t_N = 1/f_0.$$

**FIG.1**

EP 1 868 309 A1

201 202 204

PORT 1 → CH3 → PORT 1
PORT 2 PORT 2
PORT N-2 PORT N-2
PORT N-1 PORT N-1
PORT N PORT N

PORT 1:CH3 → CH1        PORT 1=CH3

~205

**FIG.2A**

201 202 204

PORT 1 → CH1 → PORT 1
PORT 2 PORT 2
PORT 3 → CH3 → PORT 3
PORT N-1 PORT N-1
PORT N PORT N

PORT 1=CH1        PORT 1=CH1

~205

**FIG.2B**

FIG.3B

PORT 1
PORT 2
PORT N-2
PORT N-1
PORT N

304

OUTPUT IS OBTAINED

305

PORT 1=CH1

301

306

FIG.3A

PORT 1
PORT 2
PORT N-2
PORT N-1
PORT N

304

NO OUTPUT

305

SHIFT CHANNELS ONE BY ONE

301

306

FIG.4

160Gbit/s

OPTICAL TIME-DIVISION-MULTIPLEXED SIGNAL

TIME

20GHz

CHIRP LIGHT PULSE TRAIN

TIME

401 OPTICAL COUPLER

402 SEMICONDUCTOR OPTICAL AMPLIFIER (FWM EFFECT)

403 WAVELENGTH FILTER

CH1 CH3 CH3 CH4 CH5 CH6 CH7 CH8

FIG.5

FIG.6

FIG.7

FIG.8

EP 1 868 309 A1

TIME-DIVISION MULTIPLEXED
LIGHT SIGNAL ENTERED TO
MUTUALLY CORRELATED
SIGNAL GENERATOR 605-1

TIME-DIVISION MULTIPLEXED
LIGHT SIGNAL ENTERED TO
MUTUALLY CORRELATED
SIGNAL GENERATOR 605-2

TIME-DIVISION MULTIPLEXED
LIGHT SIGNAL ENTERED TO
MUTUALLY CORRELATED
SIGNAL GENERATOR 605-3

TIME-DIVISION MULTIPLEXED
LIGHT SIGNAL ENTERED TO
MUTUALLY CORRELATED
SIGNAL GENERATOR 605-N

GATE LIGHT PULSE TRAIN
ENTERED TO MUTUALLY
CORRELATED SIGNAL
GENERATORS 605-1 TO 605-N

**FIG.9**

FIG.10

160Gbit/s
TIME-DIVISION MULTIPLEXED LIGHT SIGNAL

20GHz
GATE LIGHT PULSE TRAIN

700
701
702
707-1
707-8
708-1
708-8

704-1, 704-2, 704-3, 704-4, 704-5, 704-6, 704-7, 704-8
705-1, 705-2, 705-3, 705-4, 705-5, 705-6, 705-7, 705-8

706-1 OPTICAL FILTER CH1
706-2 OPTICAL FILTER CH2
706-3 OPTICAL FILTER CH3
706-4 OPTICAL FILTER CH4
706-5 OPTICAL FILTER CH5
706-6 OPTICAL FILTER CH6
706-7 OPTICAL FILTER CH7
706-8 OPTICAL FILTER CH8

FIG.11

EP 1 868 309 A1

EP 1 868 309 A1

TIME-DIVISION MULTIPLEXED
LIGHT SIGNAL ENTERED TO
MUTUALLY CORRELATED SIGNAL
GENERATORS 605-1 TO 605-N

CH1  2  3  4      N

TIME

GATE LIGHT PULSE TRAIN
ENTERED TO MUTUALLY
CORRELATED SIGNAL
GENERATOR 605-1

$\Delta t$

TIME

GATE LIGHT PULSE TRAIN
ENTERED TO MUTUALLY
CORRELATED SIGNAL
GENERATOR 605-2

$2\Delta t$

TIME

GATE LIGHT PULSE TRAIN
ENTERED TO MUTUALLY
CORRELATED SIGNAL
GENERATOR 605-3

TIME

$(N-1)\Delta t$

GATE LIGHT PULSE TRAIN
ENTERED TO MUTUALLY
CORRELATED SIGNAL
GENERATOR 605-N

TIME

# FIG.12

26

FIG.13

FIG.14

EP 1 868 309 A1

TIME-DIVISION MULTIPLEXED LIGHT
SIGNAL ENTERED TO MUTUALLY
CORRELATED SIGNAL GENERATORS 605-1

GATE LIGHT PULSE TRAIN ENTERED
TO MUTUALLY CORRELATED SIGNAL
GENERATOR 605-1

TIME-DIVISION MULTIPLEXED LIGHT
SIGNAL ENTERED TO MUTUALLY
CORRELATED SIGNAL GENERATORS 605-2

GATE LIGHT PULSE TRAIN ENTERED
TO MUTUALLY CORRELATED SIGNAL
GENERATOR 605-2

TIME-DIVISION MULTIPLEXED LIGHT
SIGNAL ENTERED TO MUTUALLY
CORRELATED SIGNAL GENERATORS 605-3

GATE LIGHT PULSE TRAIN ENTERED
TO MUTUALLY CORRELATED SIGNAL
GENERATOR 605-3

TIME-DIVISION MULTIPLEXED LIGHT
SIGNAL ENTERED TO MUTUALLY
CORRELATED SIGNAL GENERATORS 605-N

GATE LIGHT PULSE TRAIN ENTERED
TO MUTUALLY CORRELATED SIGNAL
GENERATOR 605-N

FIG.15

29

**FIG.16**

FIG.17

806 — OPTICAL COUPLER

805-1 — CROSS CORRELATION SIGNAL GENERATOR
CROSS CORRELATION SIGNAL GENERATOR
CROSS CORRELATION SIGNAL GENERATOR
805-N — CROSS CORRELATION SIGNAL GENERATOR

804-1 — OPTICAL COUPLER
OPTICAL COUPLER
OPTICAL COUPLER
804-N — OPTICAL COUPLER

803-1 — $t_m$
$t_m + \triangle t1$
803-N — $t_m + \triangle t1 + \triangle t2$
$t_m + \triangle t1 + \triangle t2 \cdots + \triangle t_{N-1}$

801 — OPTICAL SPLITTER

LIGHT PULSE TRAIN OF A REPETITION FREQUENCY $f_0$(Hz) AND PULSE WIDTH $\tau$ send(s)

LIGHT SIGNAL 1 OF A BIT RATE $f_0$(bit/s)

LIGHT SIGNAL 2 OF A BIT RATE $f_0$(bit/s)

LIGHT SIGNAL 3 OF A BIT RATE $f_0$(bit/s)

LIGHT SIGNAL N OF A BIT RATE $f_0$(bit/s)

LIGHT PULSE TRAIN
OF A REPETITION
FREQUENCY $f_0$(Hz)
AND PULSE WIDTH
$\tau$send(s)

IRREGULAR-INTERVALS
TIME-DIVISION-MULTIPLEXED
SIGNAL OF A BIT RATE $Nf_0$(Hz)

FIG.18

FIG.19

TIME-DIVISION MULTIPLEXED LIGHT SIGNAL ENTERED TO MUTUALLY CORRELATED SIGNAL GENERATOR 605-1 ———→ TIME

TIME-DIVISION MULTIPLEXED LIGHT SIGNAL ENTERED TO MUTUALLY CORRELATED SIGNAL GENERATOR 605-2 ———→ TIME

TIME-DIVISION MULTIPLEXED LIGHT SIGNAL ENTERED TO MUTUALLY CORRELATED SIGNAL GENERATOR 605-3 ———→ TIME

TIME-DIVISION MULTIPLEXED LIGHT SIGNAL ENTERED TO MUTUALLY CORRELATED SIGNAL GENERATOR 605-N-1 ———→ TIME

TIME-DIVISION MULTIPLEXED LIGHT SIGNAL ENTERED TO MUTUALLY CORRELATED SIGNAL GENERATOR 605-N ———→ TIME

LIGHT PULSE TRAIN ENTERED TO MUTUALLY CORRELATED SIGNAL GENERATORS 605-1 TO 605-N ———→ TIME

# FIG.20

EP 1 868 309 A1

**European Patent Office**

**EUROPEAN SEARCH REPORT**

Application Number

EP 07 07 5721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 11 084439 A (NIPPON TELEGRAPH & TELEPHONE) 26 March 1999 (1999-03-26)<br>* paragraph [0028] *<br>* claims 1-16 *<br>* Abstract *<br>----- | 1-10 | INV.<br>H04J14/08<br>H04J14/02 |
| A | US 5 760 937 A (ISHIKAWA ET AL) 2 June 1998 (1998-06-02)<br>* column 33, line 3 - column 34, line 52 *<br>* claims 1-11 *<br>----- | 1-10 | |

TECHNICAL FIELDS SEARCHED (IPC)

H04J

The present search report has been drawn up for all claims

| Place of search | Date of completion of the search | Examiner |
|---|---|---|
| Munich | 6 November 2007 | Belloni, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 07 5721

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2007

| Patent document cited in search report | | Publication date | Patent family member(s) | | Publication date |
|---|---|---|---|---|---|
| JP 11084439 | A | 26-03-1999 | JP | 3445159 B2 | 08-09-2003 |
| US 5760937 | A | 02-06-1998 | US | 5909297 A | 01-06-1999 |
| | | | US | 5815294 A | 29-09-1998 |
| | | | US | 5754322 A | 19-05-1998 |
| | | | US | 5896217 A | 20-04-1999 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002077091 A
- JP 7799484 A
- US 5610911 A
- JP 10173634 A
- US 6178022 B